# EUROPEAN PATENT APPLICATION

(11) **EP 1 862 207 A1**
(43) Date of publication of application: **05.12.2007**
(21) Application number: 06011185.3
(22) Date of filing: 31.05.2006
(51) Int. Cl.: B01D 29/41, B01D 29/01

(54) **Disc-shaped filter elements and methods to provide disc-shaped filter elements**

(71) Applicant: NV Bekaert SA, 8550 Zwevegem (BE)
(72) Inventor: Verschaeve, Frank, 8553 Otegem (BE); Vanacker, Frank, 8700 Tielt (BE)
(74) Representative: Bird, William Edward

(57) **Abstract**

The present invention relates to a disc-shaped filter element and to a method to provide a disc-shaped filter element. A disc-shaped filter element has a diameter K and comprises two ring-like shaped, liquid permeable support members having an outer edge having a diameter Ds and an inner edge, having a largest width Ws. The filter element comprises a first and a second ring shape-like filter membrane with outer and inner edges, being supported by the support members. The inner edges of the support members and the inner edges of the filter membranes are liquid tight coupled to the coupling means of a hub. The first surface of the first support member and the second surface of the second support member are separated from each other over a distance H at the outer wall of the hub. The support member are provided with a radius of curvature r being smaller of equal to (K²/4H)+H/4 along at least a zone of the support member, which zone is delimited by a first imaginary circle along the support member having a diameter of 0.9*Ds and a second imaginary circle along the support member having a diameter of 1.1*Ws, which imaginary circles being concentric with the disc-like support member

## Description

### Technical field of the invention

The present invention relates to disc-shaped filter elements and methods to provide disc-shaped filter elements as well as devices including such disk-shaped filter elements.

### Background of the invention

Disc shaped filter elements or leaf discs are well known in the art. For example, it is known to stack several disc shaped filter elements concentrically on a perforated tube, which stack is located in a filter housing. A liquid, e.g. edible liquids such as oils, fruit juice or wines, are filtered by providing the particle loaded liquid to the outer side of the disc shaped filter elements, and discharging filtrate via the perforated tube, when the filtrate has passed though the filter membranes being part of the disc shaped filter elements.

Examples of a disc shaped filter element are described in US4902420 and US4637877. In US4637877, a disc shaped filter element comprises a hub and two filter media being sheets of fibers. The disc shaped filter element further comprises two perforated plates. Along the outer edge of the disc shaped filter element, the filter media and the plates are welded together. The two filter media are welded to the hub along their inner edge.

Such filter discs, as shown in the second figure of US4637877, have some disadvantages. The filter media are not supported along their surface by the plates. During filtration, the filter media is forced to he plate means, which creates the excess of filter media to wrinkle. These wrinkles are weak locations, which will be the origin of the bursts during cleaning. When such discs are cleaned by back flushing, as is often done, the filter media are not supported. This causes either the media to burst, or, in order to avoid such burst; the media are to be provided sufficiently strong and thick, i.e. at least self-supporting.

Other disc shaped filter elements have a support along the surface of the filter media, e.g. as shown in US6343697. However often it is noticed that the disc shaped filter elements tends to buckle to one side of its sides, causing the disc shaped filter element to be rather 'dish-like'. This is especially the case when temperatures are used during fixing of several elements to each other, e.g. during welding of the filter media to the support plate along the outer edge.

Such distortion disturbs the proper use of the disc shaped filter elements because the preset distances between adjacent elements in a stack is no longer met. This may cause improper cleaning of the discs or a reduction of the filtration yield.

### Summary of the invention

It is an object of the present invention to provide good disc shaped filter elements, and methods to provide such disc shaped filter elements. It is an advantage of embodiments of the present invention that the disc shaped filter elements do not have the tendency, or at least to a less extent, to buckle to one side, and the filter membranes are fully supported by a supporting means. Hence they do not have the tendency to bend to one side when being installed or used. It is an advantage of embodiments of the present invention to provide disc-shaped filter elements, which have less risk of filter membrane rupture during cleaning by means of back pulse, back flow of back washing. It is an advantage of embodiments of the present invention to provide a method of manufacturing disc-like filter elements that is less sensitive to production parameter fluctuations.

The above objective is accomplished by a method to provided disc-like filter elements and disc-like filter elements according to the present invention.

According to a first aspect of the present invention, a first method to provide a disc-shaped filter element comprises the steps of
- providing a first and a second substantially identical, ring-like shaped, substantially flat liquid permeable support member having an outer edge and an inner central edge. The first support member and the second support member each have a first surface and a second surface;
- providing a first and a second substantially identical, ring-like shaped, substantially flat filter membrane having an outer edge and an inner central edge;
- providing a hub having a central void space, an outer wall, at least one channel extending from the void space to the outer wall and a coupling means for coupling the inner edges of the support members and the inner edges of the filter membranes to the hub;
- bringing the first filter membrane into contact with a first surface of the first support member;
- bringing the second filter membrane into contact with a first surface of the second support member;
- coupling the inner edges of the first membrane and the inner edges of the first support member liquid tight to the coupling means of the hub;
- coupling the inner edges of the second membrane and the inner edges of the second support member liquid tight to the coupling means of the hub in such a way that the second surface of the first support member and the second surface of the second support member are facing to each other and are separated from each other over a distance H being different from zero at the outer wall of the hub, and having the at least one channel extending between the second surface of the first support member and the second surface of the second support member; and
- bending and liquid-tight fixing the outer edges of the first filter membrane, the outer edges of the second filter membrane, the outer edges of the first filter membrane and the outer edges of the second filter membrane to each other.

According to a second, alternative method according to the first aspect of the present invention, the method comprises the steps of
- providing a first and a second substantially identical, ring-like shaped, substantially flat liquid permeable support member having an outer edge and an inner central edge, the first support member and the second support member each having a first surface and a second surface;
- providing a first and a second substantially identical, ring-like shaped, substantially flat filter membrane having an outer edge and an inner central edge;
- providing a hub having a central void space, an outer wall, at least one channel extending from void space to the outer wall and a coupling means for coupling the inner edges of the support members and the inner edges of the filter membranes to the hub;
- bringing the first filter membrane into contact with a first surface of the first support member;
- bringing the second filter membrane into contact with a first surface of the second support member;
- liquid-tight fixing the outer edges of the first filter membrane, the outer edges of the second filter membrane, the outer edges of the first filter membrane and the outer edges of the second filter membrane to each other in such a way that the second surface of the first support member and the second surface of the second support member are facing to each other;
- coupling the inner edges of the first membrane, the inner edges of the second membrane, the inner edges of the first support member and the inner edges of the second support member liquid tight to the coupling means of the hub in such a way that the second surface of the first support member and the second surface of the second support member are separated from each other over a distance H being different from zero at the outer wall of the hub, and having the at least one channel extending between the second surface of the first support member and the second surface of the second support member.

According to some embodiments of this second method according to the first aspect of the present invention, the step of coupling the inner edges of the first membrane, the inner edges of the second membrane, the inner edges of the first support member and the inner edges of the second support member liquid tight to the coupling means of the hub may be done by:
- introducing the hub between the second surface of the first support member and the second surface of the second support member through the inner edges of the first membrane and the inner edges of the first support member or through the inner edges of the second membrane and the inner edges of the second support member;
- coupling the inner edges of the first membrane and the inner edges of the first support member liquid tight to the coupling means of the hub;
- coupling the inner edges of the second membrane and the inner edges of the second support member liquid tight to the coupling means of the hub.

According to embodiments of the present invention, the hub may comprise a first part and a second part, the parts cooperating with each other for forming the hub. The step of introducing the hub between the second surface of the first support member and the second surface of the second support member may be done by introducing the first part and the second part, and liquid tight coupling these first and second part to each other.

It is an advantage of a disc shaped filter element obtained using the first or second method of the first aspect of the present invention, that the filter element has two outer disc-shape filter membranes which are supported by the support members, which support members tends to bulge outwards, i.e. away from the inner space of the disc shaped filter. The support members, bulging outwards, are permanently under tension and exert an outwards force to the filter membranes, which tension provides the membrane to contact the support member over substantially its whole surface. The support members are provided with a radius of curvature r being smaller of equal to (K²/4H)+H/4 along at least a substantial part of the disc shaped filter elements filter surface. K is the diameter of the disc-like filter element, whereas H is the distance between the first support member and the second support member at the outer wall of the hub of the filter element. This radius of curvature and bugling outwards, has the also the advantage that the disc filter does not have the tendency to bend to one side when being installed or used. As the membranes are tensioned on the support members, they don't have the freedom to crease, which creases are a source of ruptures during back cleaning.

According to embodiments of the present invention, the central openings of the first support member, the second support member, the first filter membrane and the second filter membrane may be substantially circular. According to some embodiments of the present invention, the central openings of the first support member, the second support member, the first filter membrane and the second filter membrane may be substantially identical.

According to some embodiments of the present invention, the filter membranes may comprise metal fibers. These metal fibers may be stainless steel fibers.

According to embodiments of the present invention, the support member may be a metal support member. The hub may be a metal hub

According to embodiments of the present invention, the liquid tight fixing of the outer edges of the first filter membrane, the second filter membrane, the first filter membrane and the second filter membrane may be done by welding. Similarly, according to embodiments of the present invention, the coupling of the inner edges of the first membrane and the inner edges of the first support member to the coupling means and the coupling of the inner edges of the second membrane and the inner edges of the second support member to the coupling means may be done by welding.

According to a second aspect of the present invention, a disc-shaped filter element has a diameter K, and comprises a first and a second ring-like shaped, liquid permeable support member having an outer edge having a diameter Ds and an inner central edge, having a largest width Ws. The first support member and the second support member each have a first surface and a second surface, the second surface of the first support member facing towards the second surface of the second support member. The disc-shaped filter element comprises a first and a second ring shape-like filter membrane having an outer edge and an inner central edge, the first filter membrane being in contact with the first surface of the first support member, the second filter membrane being in contact with the first surface of the second support member. The outer edges of the first filter membrane, the second filter membrane, the first support member and the second support member are liquid tight fixed to each other. the disc-shaped filter element further comprises a hub having a central void space, an outer wall, at least one channel extending from this void space to this outer wall and a coupling means. The inner edges of the support members and the inner edges of the filter membranes are liquid tight coupled to the coupling means of the hub. The first surface of the first support member and the second surface of the second support member are separated from each other over a distance H being different from zero at the outer wall of the hub, and the at least one channel extending between the second surface of the first support member and the second surface of the second support member. For each of the first support member and the second support member, the support member are provided with a radius of curvature r being smaller of equal to (K²/4H)+H/4 along at least a zone of the support member, which zone is delimited by a first imaginary circle along the support member having a diameter of 0.9*Ds and a second imaginary circle along the support member having a diameter of 1.1*Ws, the first imaginary circle and the second imaginary circle being concentric with the disc-like support member According to embodiments of the present invention, the zone in which a radius of curvature r being smaller of equal to (K²/4H)+H/4 is provided, may be delimited by the first imaginary circle along the support member may have a diameter of 0.975*Ds and a second imaginary circle along the support member may have a diameter of 1.025*Ws

According to embodiments of the present invention, H may be in the range of 5mm to 20mm. According to embodiments of the present invention, K may be in the range of 150mm to 400mm.

According to embodiments of the present invention, the central openings of the first support member, the second support member, the first filter membrane and the second filter membrane may be substantially circular or may be substantially identical.

According to embodiments of the present invention, the filter membranes may comprise metal fibers, possibly stainless steel fibers. According to embodiments of the present invention, the support member may be a metal support member. According to embodiments of the present invention, the hub may be a metal hub.

According to embodiments of the present invention, the liquid tight fixing of the outer edges of the first filter membrane, the second filter membrane, the first filter membrane and the second filter membrane may be welded. Possibly, the coupling of the inner edges of the first membrane and the inner edges of the first support member to the coupling means and the coupling of the inner edges of the second membrane and the inner edges of the second support member to the coupling means is welded.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The teachings of the present invention permit the design of improved methods and apparatus for filtration of liquids. The apparatus for filtration can be used for filtration of liquids, such as edible liquids, e.g. beverages like beer, wine, fruit juice, milk or alike, or oils such as olive oil. The apparatus for filtration may be used for filtration of non-edible fluids, e.g. machine oil or emulsions such as cutting oil, coolants, liquids out of which catalytic elements may be recovered, bio-ethanol or biodiesel, or fluids from pharmaceutical, biochemical or biomedical applications.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic view of several different steps of a method to provide a disc-shaped filter element according to an embodiment of the present invention.
Fig. 2 is a schematic view of several different steps of a method to provide an alternative disc-shaped filter element according to an embodiment of the present invention.
Fig. 3 is a schematic view of several different steps of an alternative method to provide a disc-shaped filter element according to an embodiment of the present invention.

In the different figures, the same reference signs refer to the same or analogous elements.

### Definitions

The following terms are provided solely to aid in the understanding of the invention. These definitions should not be construed to have a scope less than understood by a person of ordinary skill in the art.

The term "equivalent diameter" of a fiber is to be understood as the diameter of an imaginary circle, having the same surface as the average surface of a radial cross section of the fiber.

The term "liquid" is to be understood as encompassing in a broad sense, e.g. such as edible liquids, e.g. beverages like beer, wine, fruit juice or alike, or oils such as olive oil and non-edible fluids, e.g. machine oil or emulsions such as cutting oil, coolants, liquids out of which catalytic elements may be recovered, bio-ethanol or biodiesel, or fluids from pharmaceutical, biochemical or biomedical applications.

The term "metal fiber" is to be understood as a fiber made of any metal or metal alloy. An example of a suitable alloy is a stainless steel alloy such as AISI316 or AISI316 e.g. AISI316L. Metal fibers may be provided by different suitable production processes such as e.g. bundle drawing process according to US3379000, coil shaving process such as known from EP319959 or metal fibers provided by melt extraction such as described in US5027886. Metal fibers are characterised by an equivalent diameter, for the invention preferably in the range of 1µm to 120µm, such as in the range of 1µm to 60µm. The fibers may be endless long fibers (also referred to as filaments,) or may be provided as staple fibers having an average length in the range of 1 mm to 90mm. Optionally, the metal fibers are short metal fibers, obtained from the method as described in W02005/099863, W02005/099864 and W02005/099940. A combination of short metal fibers and staple metal fibers may as well be used, e.g. comprising up to 20% in weight of staple metal fibers.

The term "filter membrane" is to be understood any membrane, which is able to separate particles from a liquid. The filter membranes used for the present invention may be suitable for surface filtration as well as depth filtration. Filter membranes preferably have a thickness in the range from 0.025mm to 2mm, and may have a porosity P in the range of 40% to 95%. Metal fibers may be used for the filter membrane. Optionally, metal fibers may be blended with ceramic fibers and/or with ceramic powder and/or ceramic whiskers and/or metal powder. Optionally, the particles are provided with a catalytic component and act as a catalyst carrier. Preferably the particle diameter is less than 1/5 of the equivalent diameter of the fibers used. The ceramic fibers or powder may be made out of Al₂O₃, SiO₂ or YSZ (yttrium stabilized zirconium).

The filter membranes are preferably sintered filter membranes, especially in case the filtration membrane comprises or consists of metal fibers. Metal fiber filter membranes may be provided by the methods as described in W02005/099863, W02005/099864 and W02005/099940. Optionally, the filter membranes may further comprise metal wires or metal expanded plates to reinforce the filter membrane. Metal wires may be present as metal wire mesh or grid. Alternatively or additionally, the filter membrane may comprise metal powder sheets, perforated sheets such as perforated synthetic sheets or expanded synthetic sheets.

The term "porosity P" of a filter membrane is to be understood as 100-D, wherein D is the density of the filter membrane. The density D is the filter membrane consisting from a given material, is the ratio, expressed in percentage, of the weight per volume of the filter membrane over the theoretical weight of that same volume, in case this whole volume would have been provided completely out of said material.

The term 'ring shape-like" is to be understood as having a shape with an outer edge being substantially circular, and having an inner edge which inner edge encompasses the centre of the outer edge and which inner edge is usually concentric with the outer edge, although the inner edge is not necessarily circular. A circular inner edge is however preffered. The maximum width W of the inner edge is to be understood as the larges distance measurable between two points of the inner edge. As an example, in case the inner edge has a circular shape, W is the diameter of the circle. In case the inner edge is rectangular, the maximum width W is the length of a diagonal.

The term "radius r" is to be understood as the radius measured along the line of intersection of the filter membrane and a plane comprising the axis of the disc-shaped filter element.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. Thus, the scope of the expression "a device A coupled to a device B" should not be limited to devices or systems wherein an output of device A is directly connected to an input of device B. It means that there exists a path between an output of A and an input of B which may be a path including other devices or means.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

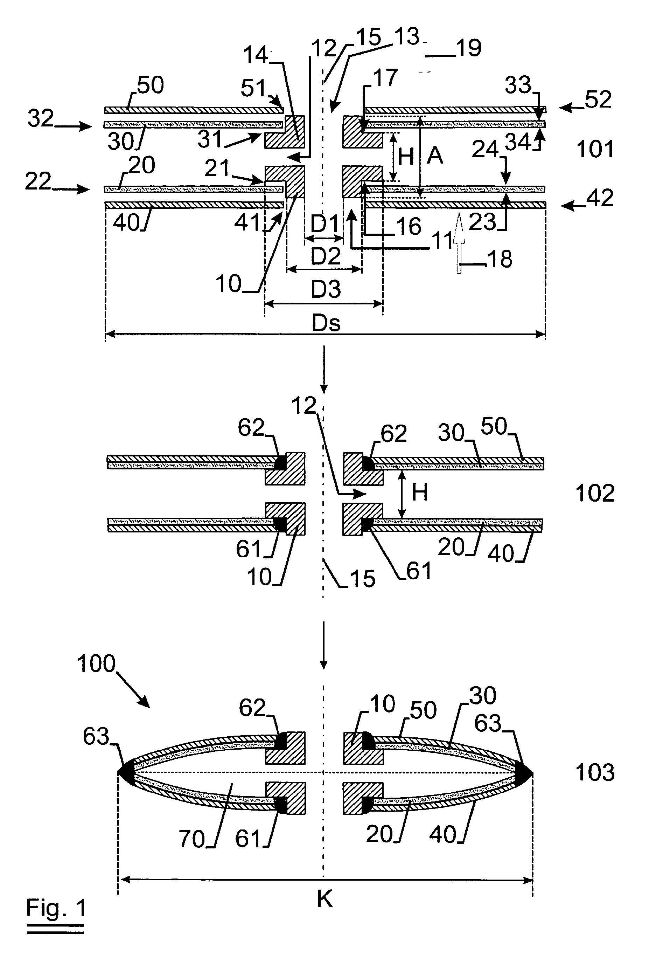

A first embodiment of a method to provide a disc-shape filter element is set out schematically in Fig. 1. As referred to by reference 101, a number of elements of the disc-shape filter element are provided. A hub 10 is provided having a coupling means 11, an outer wall 14 an inner void space 13 and at least one channel 12 extending from the inner void space 13 to the outer wall 14. As shown in Fig. 1, the hub 10 is a tubular metal part having a central axis 15. The outer wall of the tube 14 has two rims 16 and 17, which are the coupling means 11 of the hub. Through the wall of the tubular part, a number of channels 12 are provided which channels 12 extend from the inner void of the tube to the outer wall 14. As an example, the hub has a diameter D1 of the inner void space of 50mm. The outer diameter D3 of the hub is about 70mm, whereas at the location of the rims 16 and 17, the diameter D2 of the tubular element is about 60mm. The total height A of the hub is about 10mm, whereas the distance H between the two rims is about 8mm. The height H however may preferably be in the range of 5mm to 20mm, and larger heights H are used for larger diameters Ds, ranging preferably from 150mm to 400mm.

A first and a second substantially identical ring-like shaped, substantially flat liquid permeable support members 20 and 30 are provided. The outer edge 22 and 32 of the support members 20 and 30 are substantially identical and have a diameter Ds in this embodiment of about 300mm. The support member is a liquid permeable plate, preferably a stainless steel plate, e.g. provided from AISI 316L of AISI 304 alloy, and preferably has a thickness in the range of 0.5mm to 1 mm. For this particular embodiment, an AISI 316L plate of a thickness of 0.5mm was used. The plate is provided with apertures such as substantially circular holes or slots. As an example, the slots may be substantially rectangular slots having their long edge substantially in the radial direction of the disc.

The inner edge 21 and 31 of the support members 20 and 30 is substantially circular and coincides with the diameter of the wall 14 of the hub 10 along the rim. The diameter of the inner edge of the support members is identical or slightly larger than D2.

A first and a second substantially identical ring-like shaped, substantially flat filter membrane 40 and 50 are provided. The outer edge 42 and 52 of the filter membranes 40 and 50 are substantially identical and have a diameter Ds of about 300mm. The filter membrane may be a surface filtration membrane such as obtained from the method as described in W02005/099863. alternatively, a Bekipor® medium 3AI3 from he company NV BEKAERT SA from Zwevegem, Belgium may be used.

The inner edge 41 or 51 of the filter membranes 40 or 50 respectively, is substantially circular and coincide with the diameter of the wall 14 of the hub 10 along the rims 16 and 17. The diameter of the inner edges 41 and 51 of the filter membranes 40 and 50 are identical or slightly larger than D2 and substantially identical to the inner edge 21 and 31 of the support members 20 and 30. The larges distance Ws between two points of the inner edge is thus D2

The first filter membrane 40 is brought into contact with the first surface 23 of the first support member 20. The second filter membrane 50 is brought into contact with the first surface 33 of the first support member 30. The combination of firs filter membrane 40 and first support member 20 is than mounted to the hub by bringing the inner edge 41 of the first filter membrane 40 and the inner edge 21 of the first support member 20 into contact with rim 16 by introducing the tubular element though the inner edges at side 18 of the hub 10. The combination of second filter membrane 50 and second support member 30 is than mounted to the hub 10 by bringing the inner edge 51 of the second filter membrane 50 and the inner edge 31 of the second support member 30 into contact with rim 17 by introducing the tubular element though the inner edges at side 19 of the hub 10. The mounting is done in such a way that the second surface 24 of the first support member 20 is facing the second surface 34 of the second support member 30, and that the at least one channel 12 extends from the inner void space 13 between the second surface 24 of the first support member 20 and the second surface 34 of the second support member 30.

As referred to by reference 102, the inner edges 21 and 41 of the first filter membrane 40 and first support member 20 are now liquid-tight coupled to the hub 10 at the coupling means 11, i.e. the rim 16. In a similar way, the inner edges 31 and 51 of the first filter membrane 50 and first support member 30 are now liquid-tight coupled to the hub 10 at the coupling means 11, i.e. the rim 17. This coupling can be done by any suitable joining technique, e.g. by gluing, but in the present example it is done by TIG-welding. A weld coupling 61 or 62 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used to couple the hub, the filter membranes and the support members.

The intermediate product now obtained has a central hub 10, of which two substantially flat support members extend in a plane substantial perpendicular to the central axis 15 of the hub 10. The second surface 24 of the first support member 20 and the second surface 34 of the second support member 30 are separated along the outer wall 14 of the hub 10 over a distance H and are facing each other.

As referred to by reference 103, the outer edges 22, 32, 42 and 52 of the first support member 20, the second support member 30 the first filter membrane 40 and the second filter membrane 50 are now bend to each other and liquid tight fixed to each other. The edges meet at a height, halfway the height of the distance between the two rims 16 and 17. The liquid tight fixing may be made with any suitable joining technique, e.g. preferably done by welding, preferably by TIG-welding. A weld coupling 63 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used to couple the first filter membrane 40 and the second filter membrane 50.

A disc-like filter element 100 is now provided having a diameter K, being less than Ds, and which filter element 100 has a void space 70 which is encompassed by the two supporting members 20 and 30 and the inner wall 14 of the hub, which void space 70 has at least one channel via which it can discharge liquid to the inner void space 13 of the hub. Preferably, K is in the range 150mm to 400mm, such as 199.9mm in the case of the embodiment as set out by means of Fig. 1.

The disc-like filter elements have support members 20 and 30, which support member are provided with a radius of curvature r being smaller of equal to (K²/4H)+H/4 along at least a zone of the support member, which zone is delimited by a first imaginary circle along the support member having a diameter of 0.9*Ds and a second imaginary circle along the support member having a diameter of 1.10*Ws, the first imaginary circle and the second imaginary circle being concentric with the disc-like support member, i.e. concentric with the axis 15 of hub 10. The radius r is measured along the intersection of the support member and a plane which comprises the axis of the filter element, and the radius r is inwards oriented, this is to be understood that the center of curvature is located at the side of the support member, which side is oriented towards the other support member. Possibly, as in present embodiment according to Fig. 1, a radius of curvature r being smaller of equal to (K²/4H)+H/4 along at least a zone of the support member, which zone is delimited by a first imaginary circle along the support member having a diameter of 0.975*Ds and a second imaginary circle along the support member having a diameter of 1.025*Ws, the first imaginary circle and the second imaginary circle being concentric with the disc-like support member, i.e. concentric with the axis 15 of hub 10.

The bending radius is directed inwards the disc-like filter element. It has the advantage that the support member provided an outwards force to the filter membrane, which contacts the support member at its first surface. The filter membrane is so-to-say pretensioned on the first surface of the support member. This pretension prevents the filter membrane to loose contact with the support member, during use of the filter element, i.e. during filtration or cleaning operation. The pretension forces working on the first support member and the second support member also stabilise each other, which is believed to be the reason why during production of the filter elements, the disc-shape filter element does not show a tendency to buckle to one of the sides of the disc-like shape. A dimensionally more stable filter element is obtained. It was noticed that slight difference in operation parameters, e.g. welding settings, does not influence the stability of the filter element and the production repeatability.

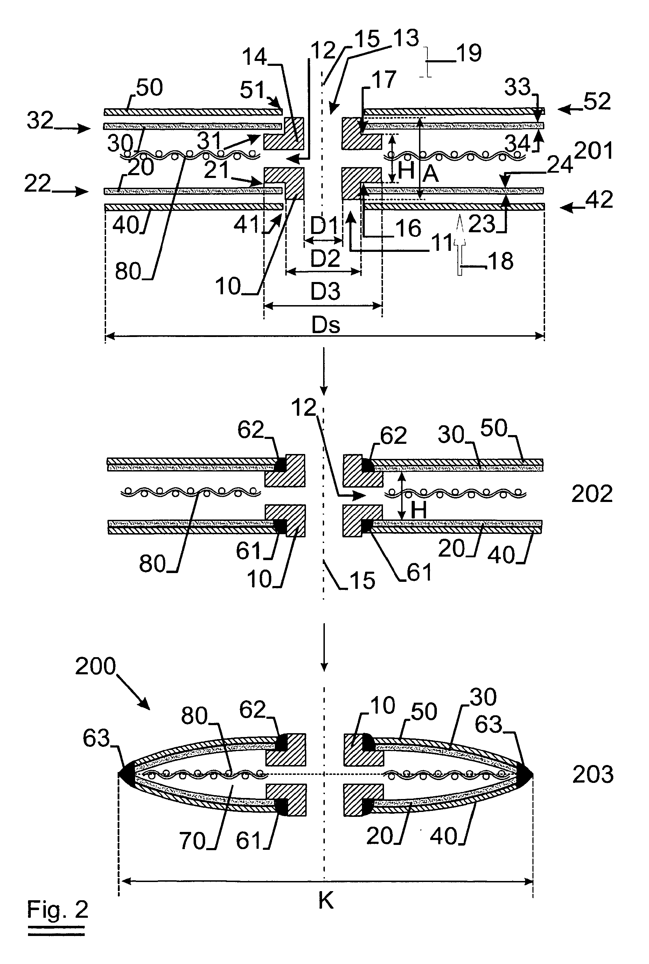

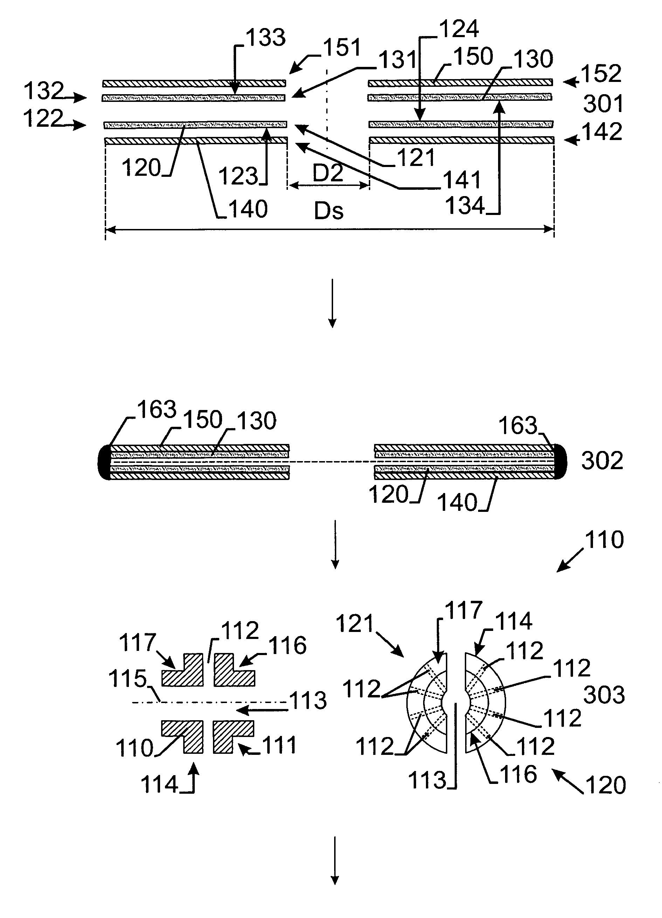

An alternative disc-like filter element 200 is shown in Fig. 2. Identical numbers refer to identical features of Fig. 1. Between the two support members 20 and 30 a further spacing means 80 is provided in the void space 70. This spacing means may be one or possibly more than one wire mesh. In the present embodiment as shown in Fig. 1, a wire mesh of stainless steel wires with diameter of about 1 mm and 10 mesh openings per linear inch is used.

This spacing means is provided in production of the disc-like filter element during the mounting of the filter support members and accompanying filter membranes to the hub.

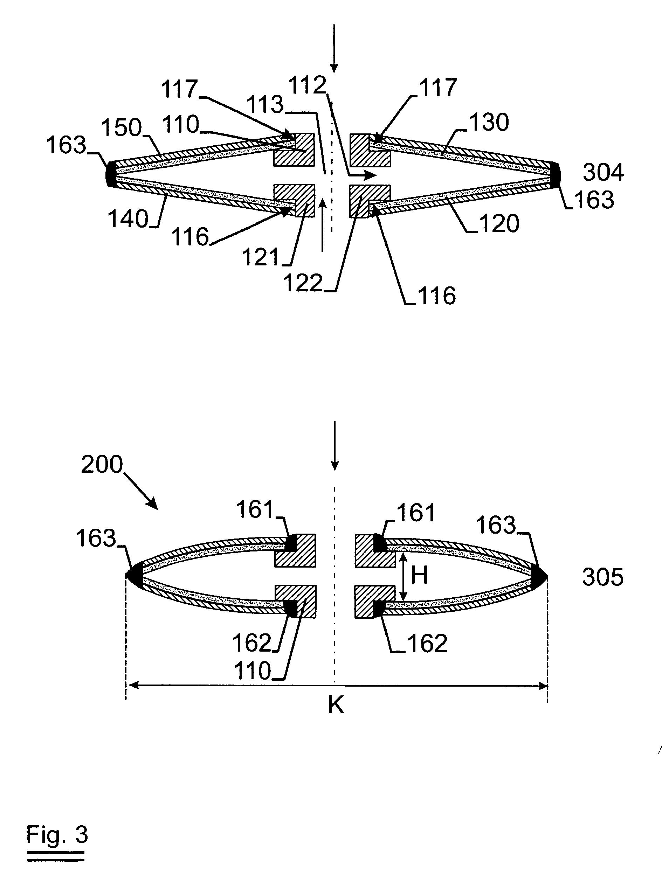

An alternative method to provide a disc-like filter element as subject of the present invention, is shown in Fig. 3.

As referred to by reference 301, a first and a second substantially identical ring shape like, substantially flat liquid permeable support member 120 and 130 are provided, which are identical to the support members 20 and 30 of Fig. 1.

The inner edge 121 and 131 of the support members 120 and 130 is substantially circular.

A first and a second substantially identical ring shape like, substantially flat filter membrane 140 and 150 are provided, identical to the filter membranes 40 and 50 of Fig. 1.

The inner edge 141 and 151 of the filter membranes 140 and 150 is substantially circular. The diameter of the inner edge 141 and 151 of the filter membranes 140 and 150 is identical or slightly larger than D2 and substantially identical to the inner edge 121 and 131 of the support members 120 and 130. The larges distance Ws between two points of the inner edge is thus D2.

As referred to by reference 302, the first filter membrane 140 is brought into contact with the first surface 123 of the first support member 120. The second filter membrane 150 is brought into contact with the first surface 133 of the first support member 130. The first filter membrane and the first support member are brought in contact with the second filter membrane and the second support member. This is done in such a way that the second surface 124 of the first support member 120 is facing to the second surface 134 of the second support member 130.

The outer edges 122,132, 142 and 152 of the first support member 120, the second support member 130 the first filter membrane 140 and the second filter membrane 150 are now bend to each other and liquid tight fixed to each other. The liquid tight fixing is preferably done by welding, such as TIG-welding. A weld coupling 163 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used.

The intermediate product now obtained has two substantially flat and parallel support members extend. The second surface 124 of the first support member 120 and the second surface 134 of the second support member 130 are facing each other.

As referred to by reference 303, a hub 110 is provided having a coupling means 111, an outer wall 114 an inner void space 113 and at least one channel 112 extending from the inner void space 113 to the outer wall 114. The hub 110 consists out of two parts 120 and 121, which together form a tubular metal part having a central axis 115. The outer wall of the tube 114 has two rims 116 and 117, which are the coupling means 111 of the hub. Through the wall of the tubular part, a number of channels are provided which channels extend from the inner void of the tube to the outer wall 114. As an example, the hub has a diameter D1 of the inner void space of 50mm. The outer diameter D3 of the hub is about 70mm, whereas at the location of the rims 116 and 117, the diameter D2 of the tubular element is about 60mm. The total height A of the hub is about 10mm, whereas the distance H between the two rims is about 8mm.

As referred to by reference 304, the combination of first filter membrane 140, first support member 120, second filter membrane 150 and second support member 130 is than coupled to the hub by introducing the first part 121 and the second part 122 of the hub 110 between the first and second support member 120 and 130 via the inner edge 141 of the first filter membrane 140 and the inner edge 121 of the first support member 120, or via the inner edge 151 of the first filter membrane 150 and the inner edge 131 of the first support member 130.

The inner edge 141 of the first filter membrane 140 and the inner edge 121 of the first support member 120 is brought into contact with rim 116, inner edge 151 of the first filter membrane 150 and the inner edge 131 of the first support member 130 is brought into contact with rim 117.

The inner edge 121 and 131 of the support members 120 and 130 coincide with the diameter of the wall 114 of the hub 110 along the rim. The diameter of the inner edge of the support members is identical or slightly larger than D2.

The inner edge 141 and 151 of the filter membranes 140 and 150 coincide wit the diameter of the wall 114 of the hub 110 along the rims 116 and 117.

As referred to by reference 305, the inner edges 121 and 141 of the first filter membrane 140 and first support member 120 are now liquid-tight coupled to the hub 110 at the coupling means 111, i.e. the rim 116. In a similar way, the inner edges 131 and 151 of the first filter membrane 150 and first support member 30 are now liquid tight coupled to the hub 110 at the coupling means 111, i.e. the rim 117. This coupling can be done by any suitable joining technique, e.g. by gluing, but in the present example it is bone by welding, preferably TIG-welding. A weld coupling 161 or 162 is provided. Alternatively, other methods of welding such as but welding, capacitive discharge welding, resistance welding, ultrasonic welding, micro plasma welding or laser welding may be used. As an other alternative, soldering such as high temperature soldering or sintering, or brazing, or extrusion of polymer material, fluid tight folding or gluing, may be used.

The two parts 121 and 120 of the hub 110 are coupled to each other in a liquid tight way by any suitable technique, e.g. by gluing or welding.
The obtained disc-like filter element 200 has substantially the same properties as the properties of the hub 100 obtained by the method as disclosed by mean of Fig. 1.

Other arrangements for accomplishing the objectives of the methods to provide disc-like filter elements as well as disc-like filter elements itself, both embodying the invention will be obvious for those skilled in the art.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A method to provide a disc-shaped filter element, said method comprising the steps of
• providing a first and a second substantially identical, ring-like shaped, substantially flat liquid permeable support member having an outer edge and an inner central edge, said first support member and said second support member each having a first surface and a second surface;
• providing a first and a second substantially identical, ring-like shaped, substantially flat filter membrane having an outer edge and an inner central edge;
• providing a hub having a central void space, an outer wall, at least one channel extending from said void space to said outer wall and a coupling means for coupling said inner edges of said support members and said inner edges of said filter membranes to said hub;
• bringing said first filter membrane into contact with a first surface of said first support member;
• bringing said second filter membrane into contact with a first surface of said second support member;
• coupling said inner edges of said first membrane and said inner edges of said first support member liquid tight to said coupling means of said hub;
• coupling said inner edges of said second membrane and said inner edges of said second support member liquid tight to said coupling means of said hub in such a way that the second surface of said first support member and the second surface of the second support member are facing to each other and are separated from each other over a distance H being different from zero at the outer wall of said hub, and having the at least one channel extending between said second surface of said first support member and the second surface of the second support member; and
• bending and liquid-tight fixing said outer edges of said first filter membrane, said outer edges of said second filter membrane, said outer edges of said first filter membrane and said outer edges of said second filter membrane to each other.

2. A method to provide a disc-shaped filter element, said method comprising the steps of
• providing a first and a second substantially identical, ring-like shaped, substantially flat liquid permeable support member having an outer edge and an inner central edge, said first support member and said second support member each having a first surface and a second surface;
• providing a first and a second substantially identical, ring-like shaped, substantially flat filter membrane having an outer edge and an inner central edge;
• providing a hub having a central void space, an outer wall, at least one channel extending from said void space to said outer wall and a coupling means for coupling said inner edges of said support members and said inner edges of said filter membranes to said hub;
• bringing said first filter membrane into contact with a first surface of said first support member;
• bringing said second filter membrane into contact with a first surface of said second support member;
• liquid-tight fixing said outer edges of said first filter membrane, said outer edges of said second filter membrane, said outer edges of said first filter membrane and said outer edges of said second filter membrane to each other in such a way that the second surface of said first support member and the second surface of the second support member are facing to each other;
• coupling said inner edges of said first membrane, said inner edges of said second membrane, said inner edges of said first support member and said inner edges of said second support member liquid tight to said coupling means of said hub in such a way that the second surface of said first support member and the second surface of the second support member are separated from each other over a distance H being different from zero at the outer wall of said hub, and having the at least one channel extending between said second surface of said first support member and the second surface of the second support member.

3. A method as in claim 2, wherein the step of coupling said inner edges of said first membrane, said inner edges of said second membrane, said inner edges of said first support member and said inner edges of said second support member liquid tight to said coupling means of said hub is done by:
o introducing said hub between the second surface of said first support member and the second surface of the second support member through said inner edges of said first membrane and said inner edges of said first support member or through said inner edges of said second membrane and said inner edges of said second support member;
o coupling said inner edges of said first membrane and said inner edges of said first support member liquid tight to said coupling means of said hub;
o coupling said inner edges of said second membrane and said inner edges of said second support member liquid tight to said coupling means of said hub.

4. A method as in claim 2 or 3, wherein said hub comprises a first part and a second part, said parts cooperating with each other for forming said hub, said step of introducing said hub between the second surface of said first support member and the second surface of the second support member is done by introducing said first part and said second part, and liquid tight coupling said first and said second part to each other.

5. A method as in any one of the claims 1 to 4, wherein the central openings of said first support member, said second support member, said first filter membrane and said second filter membrane are substantially circular.

6. A method as in any one of the claims 1 to 5, wherein the central openings of said first support member, said second support member, said first filter membrane and said second filter membrane are substantially identical.

7. A method as in any one of the claims 1 to 6, wherein said filter membranes comprise metal fibers.

8. A method as in claim 7, wherein said fibres are stainless steel fibers.

9. A method as in any one of the claims 1 to 8, wherein said support member is a metal support member.

10. A method as in any previous claim, wherein said liquid tight fixing said outer edges of said first filter membrane, said second filter membrane, said first filter membrane and said second filter membrane is done by welding.

11. A method as in claim 10, wherein said hub is a metal hub.

12. A method as in any previous claim, wherein said coupling said inner edges of said first membrane and said inner edges of said first support member to said coupling means and coupling said inner edges of said second membrane and said inner edges of said second support member to said coupling means is done by welding.

13. A disc-shaped filter element having a diameter K, said disc-shaped filter element comprising a first and a second ring-like shaped, liquid permeable support member having an outer edge having a diameter Ds and an inner central edge, said inner edge having a largest width Ws, said first support member and said second support member each having a first surface and a second surface, the second surface of the first support member facing towards the second surface of the second support member, said disc-shaped filter element comprising a first and a second ring shape-like filter membrane having an outer edge and an inner central edge, the first filter membrane being in contact with the first surface of said first support member, the second filter membrane being in contact with the first surface of the second support member, the outer edges of said first filter membrane, said second filter membrane said first support member and said second support member being liquid tight fixed to each other, said disc-shaped filter element comprising a hub having a central void space, an outer wall, at least one channel extending from said void space to said outer wall and a coupling means, said inner edges of said support members and said inner edges of said filter membranes being liquid tight coupled to said coupling means of said hub, said first surface of said first support member and the second surface of the second support member being separated from each other over a distance H being different from zero at the outer wall of said hub, said at least one channel extending between said second surface of said first support member and the second surface of the second support member, for each of said first support member and said second support member, said support member being provided with a radius of curvature r being smaller of equal to (K²/4H)+H/4 along at least a zone of said support member, which zone is delimited by a first imaginary circle along said support member having a diameter of 0.9*Ds and a second imaginary circle along the support member having a diameter of 1.1*Ws, said first imaginary circle and said second imaginary circle being concentric with said disc-like support member

14. A disc-shaped filter element as in claim 13, wherein said H is in the range of 5mm to 20mm.

15. A disc-shaped filter element as in any one of the claims 13 to 14, wherein said K is in the range of 150mm to 400mm

16. A disc-shaped filter element as in any one of the claims 13 to 15, wherein the central openings of said first support member, said second support member, said first filter membrane and said second filter membrane are substantially circular.

17. A disc-shaped filter element as in any one of the claims 13 to 16, wherein the central openings of said first support member, said second support member, said first filter membrane and said second filter membrane are substantially identical.

18. A disc-shaped filter element as in any one of the claims 13 to 17, wherein said filter membranes comprise metal fibers.

19. A disc-shaped filter element as in claim 18, wherein said fibres are stainless steel fibers.

20. A disc-shaped filter element as in any one of the claims 13 to 19, wherein said support member is a metal support member.

21. A disc-shaped filter element as in claim 20, wherein said liquid tight fixing said outer edges of said first filter membrane, said second filter membrane, said first filter membrane and said second filter membrane is welded.

22. A disc-shaped filter element as in claim 21, wherein said hub is a metal hub.

23. A disc-shaped filter element as in claim 22, wherein said coupling said inner edges of said first membrane and said inner edges of said first support member to said coupling means and coupling said inner edges of said second membrane and said inner edges of said second support member to said coupling means is welded.
